# EUROPÄISCHE PATENTSCHRIFT

(11) **EP 2 220 749 B1**
(45) Veröffentlichungstag und Bekanntmachung des Hinweises auf die Patenterteilung: **29.06.2011**
(21) Anmeldenummer: 08859850.3
(22) Anmeldetag: 05.12.2008
(51) Int. Cl.: H02K 5/14, H01R 39/38, H02K 5/22

(54) **BÜRSTENAGGREGAT FÜR EINE ELEKTRISCHE MASCHINE, FEDER- UND DICHTUNGSANORDNUNG FÜR DASSELBE SOWIE VERFAHREN ZU SEINER HERSTELLUNG**
BRUSH UNIT FOR AN ELECTRIC MACHINE, SPRING AND SEAL ARRANGEMENT FOR THE SAME, AND METHOD FOR THE PRODUCTION THEREOF
UNITÉ PORTE-BALAIS POUR MOTEUR ÉLECTRIQUE, SYSTÈME D'ÉTANCHÉITÉ ET SYSTÈME DE RESSORTS POUR CETTE UNITÉ ET PROCÉDÉ DE FABRICATION DE CETTE UNITÉ

(30) Priorität: 11.12.2007 DE 102007059555
(43) Veröffentlichungstag der Anmeldung: 25.08.2010
(73) Patentinhaber: Hoffmann & Co Elektrokohle Aktiengesellschaft, 4823 Steeg (AT)
(72) Erfinder: GRABNER, Herbert, A-4820 Bad Ischl (AT); LIMBERGER, Gerhard, A-4822 Bad Goisern (AT)
(74) Vertreter: Glawe, Delfs, Moll
(86) Internationale Anmeldenummer: PCT/EP2008/010339
(87) Internationale Veröffentlichungsnummer: WO 2009/074269

(56) Entgegenhaltungen:
- EP-A- 0 224 053
- EP-A- 0 343 126
- EP-A- 1 843 451
- DE-U1- 9 315 381
- FR-A- 2 582 872
- FR-A- 2 743 211
- US-A- 5 689 148
- US-A- 6 144 134

## Beschreibung

Die Erfindung betrifft ein Bürstenaggregat für elektrische Maschinen. Ein bevorzugtes Anmeldungsgebiet des Bürstenaggregats sind elektrische Motoren für Kraftfahrzeuge, insbesondere Startermotoren (Anlasser) für Verbrennungsmotoren.

An Startermotoren (Anlasser) in Automobilen werden zunehmend höhere Anforderungen bezüglich der Lebensdauer und Leistungsausbeute gestellt, die zum Teil durch die ständig steigenden Umweltanforderungen bedingt sind. Ein Beispiel hierfür ist die bereits in vielen Neufahrzeugen zur Treibstoffeinsparung eingebaute Start-Stopp-Funktion, bei der der Motor beim Stillstand des Fahrzeuges automatisch abgestellt und für das Anfahren automatisch wieder gestartet wird. Dies führt zu einer höheren Belastung des Startermotors, der durch Maßnahmen wie Erhöhung des Leiterquerschnitts und/oder Erhöhung der Bürstenzahl begegnet werden muss, wodurch sich jedoch die Materialkosten erhöhen. Dies führt zu Bemühungen, den höheren Materialkosten durch Senkung der Montagekosten zu begegnen.

DE 9315381U offenbart einen Bleichstrommotor mit einem Bürstenaggregat.

Aufgabe der Erfindung ist es, ein Bürstenaggregat für elektrische Maschinen vorzuschlagen, das eine einfache kostengünstigere Konstruktion aufweist, mit der insbesondere der Montagevorgang erheblich vereinfacht und damit auch verbilligt, werden kann, die aber gleichwohl auch die Verwendung einer erhöhten Anzahl von Bürsten, z. B. sechs Bürsten, ermöglicht.

Diese Aufgabe wird erfindungsgemäß mit dem in Anspruch 1 angegebenen Bürstenaggregat und in Anspruch 8 angegebenen Verfahren gelöst. Die abhängigen Ansprüche beziehen sich auf weitere vorteilhafte Ausgestaltung des erfindungsgemäßen Bürstenaggregats bzw. einer Feder- und/oder Dichtungsanordnung für das Bürstenaggregat und ein Verfahren zu dessen Montage.

Eine Ausführungsform des erfindungsgemäßen Bürstenaggregats und ein Verfahren zu seiner Montage wird nachstehend unter Bezugnahme auf die Zeichnungen näher erläutert. Es zeigt:
- Fig. 1: perspektivisch die Hauptbestandteile des Bürstenaggregats vor dem Zusammenbau.
- Fig. 2: eine perspektivische Ansicht einer der beiden Führungsplatten.
- Fig. 3: eine perspektivische Ansicht des fertig montierten Bürstenag- gregats.
- Fig. 4: das teilweise montierte Bürstenaggregat mit noch einzusetzen- den Federn
- Fig. 5, 6 u. 7: veranschaulichen das Einsetzen einer Bürstenfeder in ihre Auf- nahme.

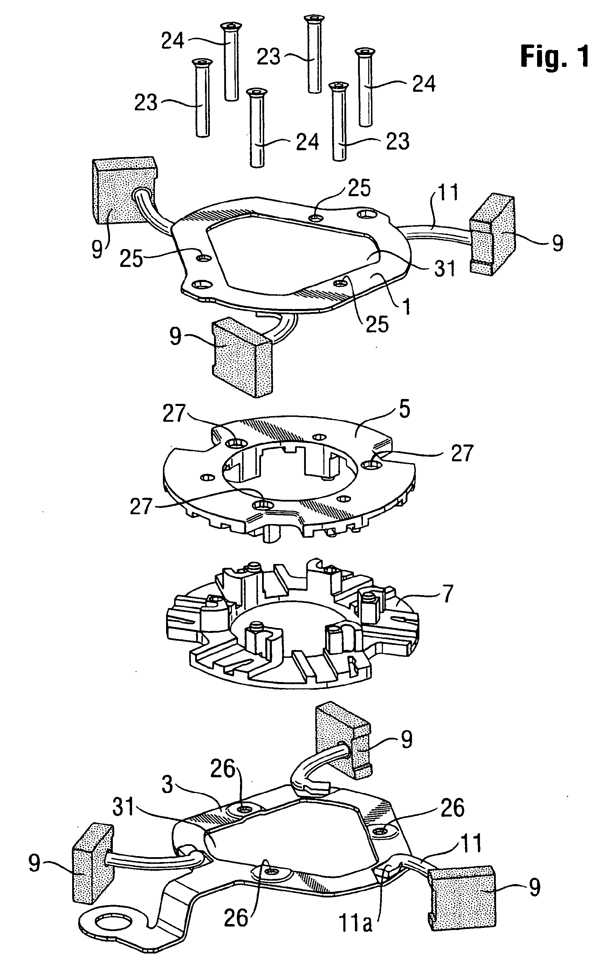

Gemäß Fig. 1 besteht die Halterkonstruktion des Bürstenaggregats aus vier ringförmigen plattenförmigen Elementen, nämlich einer oberen und einer unteren Leiterplatte 1, 3, die aus Metallblech mit geeigneter Leitfähigkeit bestehen, und zwischen diesen angeordnet einer oberen und unteren Führungsplatte 5, 7, die aus elektrisch isolierendem Material, vorzugsweise als Spritzgussteil aus Kunststoff, ausgebildet sind. Bei der hier beschriebenen Ausführungsform hat das Bürstenaggregat insbesondere sechs Bürsten 9, von denen je drei mit der oberen bzw. unteren Leiterplatte elektrisch leitend verbunden sind. Die Verbindung erfolgt jeweils über ein Kabel 11, das an der zugehörigen Bürste 9 vorzugsweise durch Einpressen befestigt ist und dessen anderes Ende 11a mit der jeweiligen Leiterplatte 1, 3 verschweißt ist.

Die Führungsplatten 5, 7 sind an ihren den Leiterplatten 1, 3 zugewandten Seiten eben ausgebildet und haben an ihren einander zugewandten Seiten eine Formgebung mit Vorsprüngen (Erhöhungen) 13 und Vertiefungen, wobei die Formgebungen der beiden Führungsplatten 5, 7 im wesentlichen spiegelbildlich bzw. wendegleich zueinander sind.

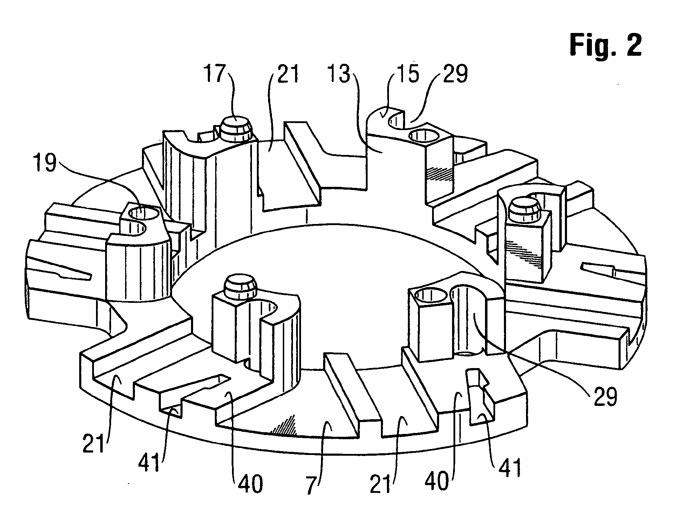

Wie aus der gegenüber Fig. 1 etwas vergrößerten Einzeldarstellung der unteren Führungsplatte 7 in Fig. 2 erkennbar ist, haben die Vorsprünge 13 obere Stützflächen 15. Die Stützflächen 15 kommen beim Zusammenfügen der Führungsplatten 5, 7 in Anlage an die entsprechenden Stützflächen der oberen Führungsplatte 5, so dass sich die Führungsplatten 5, 7 über die Vorsprünge 13 gegeneinander abstützen. Die Vorsprünge 13 sind abwechselnd mit Positionierzapfen 17 und Positionierlöchern 19 versehen, die mit den entsprechenden Zapfen und Löchern der oberen Führungsplatte 5 in Eingriff kommen, um die Führungsplatten in der korrekten Winkelstellung gegeneinander zu zentrieren und zu positionieren (indexieren). Auch die Führungsplatten 5, 7 sind zueinander spiegelbildlich bzw. wendegleich ausgebildet und können vorzugsweise identisch geformt sein, was die Herstellung der Bürstenaggregate vereinfacht. Auch die Leiterplatten 1,3 sind zueinander weitgehend spiegelsymmetrisch geformt, abgesehen von funktionsbedingten Abweichungen von der Spiegelsymmetrie, wie z. B. dem Vorhandensein einer von der unteren Leiterplatte 3 einstückig vorspringenden Anschlussfahne 45 für ein Anschlusskabel (nicht dargestellt).

Zwischen den Vorsprüngen 13 weist die Formgebung der unteren Führungsplatte 7 Vertiefungen in Form von radial durchgehenden Führungsrinnen 21 auf. Diese ergänzen sich mit den entsprechenden Führungsrinnen der oberen Führungsplatte 5 zur Bildung von radialen Führungen, in die die Bürsten 9 radial verschiebbar eingesetzt und geführt werden können. Neben jeder Führungsrinne 21, und dieser zugeordnet, ist eine Aufnahme 40 für eine auf die Bürste einwirkende Feder vorgesehen, deren Ausbildung und Funktion später beschrieben wird.

Zur Montage des Bürstenaggregats werden die Leiterplatten 1, 3 und Führungsplatten 5, 7 in der in Fig. 1 dargestellten Reihenfolge aufeinandergestapelt und mit Verbindungselementen, im vorliegenden Fall sechs Nieten 23, 24, zusammengefügt, so dass die sie einen starren zusammengefügten ringförmigen Block bilden.

Für den Durchtritt der Nieten 23, 24 sind in den Leiterplatten 1, 3 Löcher 25, 26 vorgesehen, und auch jede der Führungsplatten 5, 7 hat entsprechende Löcher 27 und in deren Fortsetzung halbrunde Ausnehmungen 29 an der nach außen gerichteten Seite jedes Vorsprungs 13.

Bei der dargestellten Ausführungsform mit sechs Bürsten 9 ist die Anordnung der Nieten so getroffen, dass jede der Leiterplatten (z. B. 1) nur drei Löcher 25 für die Aufnahme von drei Nieten 23 aufweist und im übrigen eine etwa dreiecksförmige Form hat, die drei Ausbuchtungen 31 bildet, die Platz für die übrigen drei Nieten 24 bieten. Deshalb werden beim Zusammenfügen der Bestandteile drei Nieten 23, das heißt jede zweite Niete, sich durch Löcher 25 der oberen Leiterplatte 1 und Löcher 27 der beiden Führungsplatten 5, 7 erstrecken und diese miteinander verbinden, während die übrigen drei Nieten 24 sich durch Löcher 27 der beiden Führungsplatten 5, 7 und Löcher 26 der unteren Leiterplatte 3 erstrecken und diese Teile unlösbar miteinander verbinden. Jede Leiterplatte 1 bzw. 3 ist somit durch drei Nieten mit den beiden Führungsplatten 5, 7, aber nicht mit der anderen Leiterplatte 3 bzw. 1 verbunden. Durch diese Anordnung der Nieten wird vermieden, dass die Nieten gleichzeitig mit der oberen und unteren Leiterplatte 1, 3 in elektrischen Kontakt sind und diese kurzschließen. Diese Vermeidung einer leitfähigen Verbindung zwischen den Leiterplatten 1, 3 wird ohne Verwendung von zusätzlichen Isolierbuchsen oder dgl., die die Nieten gegenüber den Leiterplatten 1, 3 isolieren.

Nach dem Zusammenfügen der vier plattenförmigen Elemente 1, 3, 5 und 7 können die Bürsten radial von außen her in die von den Führungsrinnen 21 der Führungsplatten 5, 7 gebildeten Führungen eingeschoben werden. Da die Bürsten 9 über die Kabel 11 bereits unlösbar mit der zugehörigen Leiterplatte 1 oder 3 verbunden sind, muss die Länge und Flexibilität der Kabel 11 gewählt sein, dass das Einschieben der Bürsten 9 in die Führungen möglich ist.

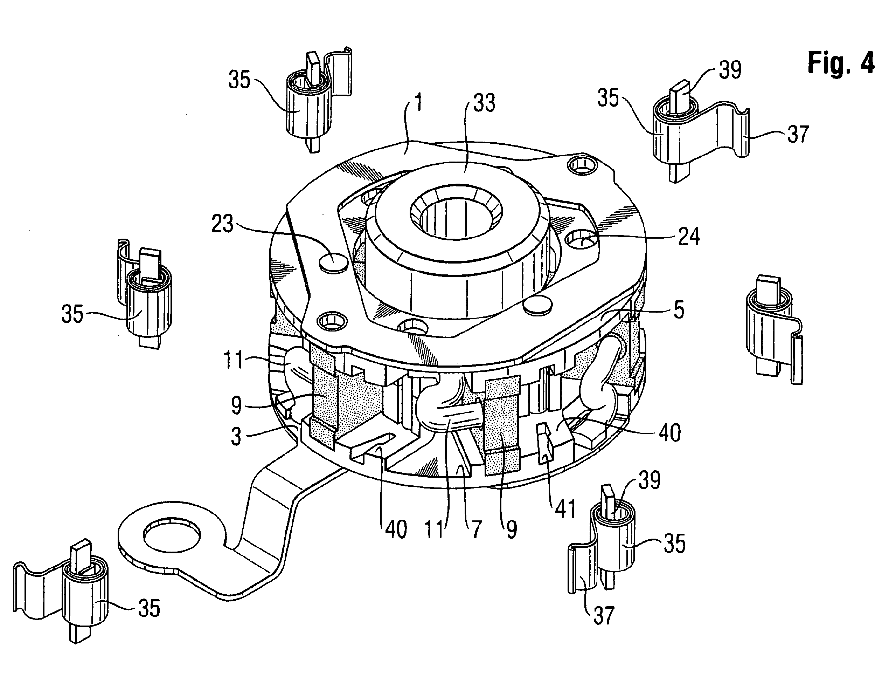

Nach dem Vernieten der Teile und dem Einschieben der Bürsten 9 in die Führungen erhält man den in Fig. 4 dargestellten Zwischenzustand des Bürstenaggregats.

Fig. 4 zeigt auch einen zylindrischen Füllkörper 33 (Schablone, Dummy), dessen Durchmesser gleich oder etwas größer ist als der des Kommutators oder Kollektors, für den das Bürstenaggregat vorgesehen ist. Dieser Dummy dient bei der Montage und für den Transport als Schablone, die als radial innerer Anschlag für die verschiebbaren federbelasteten Bürsten 9 dient und deren Endlage in der jeweiligen radialen Führung 21 definiert.

Um das Bürstenaggregat zu komplettieren und funktionsfähig zu machen, müssen noch Federn angebracht werden, die die Bürsten radial nach innen gegen den zugeordneten zylindrischen Kommutator oder Kollektor einer elektrischen Maschine drücken sollen. Wie in Fig. 4 gezeigt, sind die den Bürsten 9 zuzuordnenden Federn 35 als aus Federstahlband gewickelte Spiralfedern ausgebildet. Ihr äußeres, rinnenförmig abgebogenes Ende 37 soll gegen die radial nach außen gerichtete Stirnfläche der zugehörigen Bürste 9 anliegen. Das innere Ende der Spiralfeder 35 ist an einem Dorn oder Wickelkern 39 befestigt, insbesondere angeschweißt, der einen flach rechteckigen Querschnitt hat und dessen somit ebenfalls abgeflachte Enden auf beiden Seiten über die Spiralfeder 35 überstehen. Jede dieser Federn 35 wird in eine zugehörige Aufnahme 40 eingesetzt, die jeweils neben einer zugeordneten Bürste in den Führungsplatten 5, 7 ausgebildet ist und an ihrer oberen und unteren Stirnfläche je eine Führungsrille 41 zur Aufnahme des oberen bzw. unteren Endes des Wickelkerns 39 der Feder 35 aufweist.

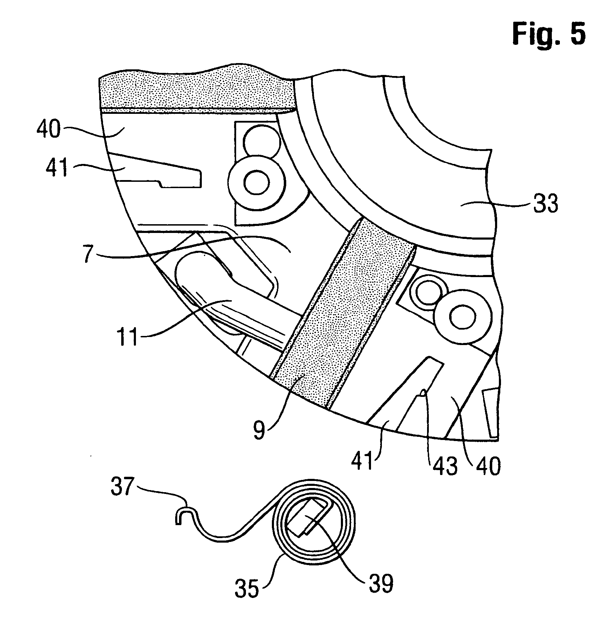

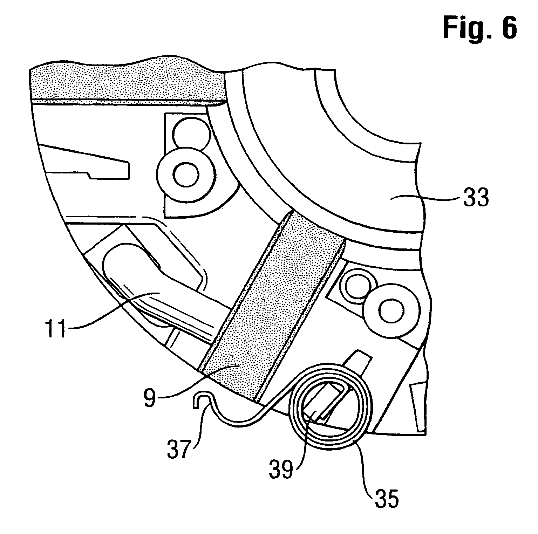

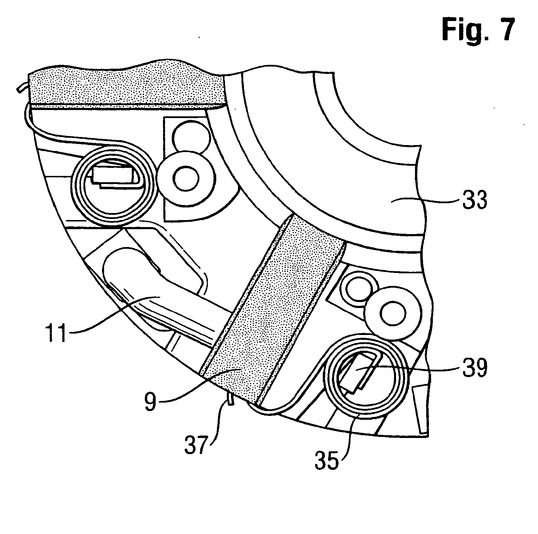

Fig. 5, 6 und 7 zeigen vergrößert ein Detail einer Draufsicht auf die untere Führungsplatte 7 und erläutern das Einsetzen einer Feder 35 in die einer Bürste 9 zugeordnete Aufnahme 40. Fig. 5 zeigt die Feder 35 auf ihrem Wickelkern 39 vor dem Einsetzen. In Fig. 6 ist die Feder 35 teilweise eingesetzt, wobei die Enden des Wickelkerns 39 in dem Anfangsabschnitt der oberen und unteren Führungsrille 41 geführt werden. Nachdem das freie Ende 37 der Feder 35 zur Anlage an der äußeren Stirnfläche der Bürste 9 gelangt ist, wird die Feder 35 noch weiter eingeschoben, wobei sie einerseits vorgespannt wird und andererseits ihr Wickelkern 39 eine nach innen vorspringende Rastnase 43 der Führungsrille 41 passiert. Da das freie Ende 37der Feder 35 auf die Bürste 9 drückt, wirkt auf die Feder und den an ihrem inneren Ende befestigten Winkelkern 39 eine Reaktionskraft, die am inneren Ende der Feder und an dem daran befestigten Wickelkern 39 ein Drehmoment (in Fig. 5 bis 7 entgegen dem Uhrzeigersinn) ausübt, durch welches der Wickelkern 39 hinter die Rastnase 43 einrastet. Die Feder 35 hat dadurch ihre Endlage erreicht und ist in dieser durch ihre eigene Reaktionskraft fixiert.

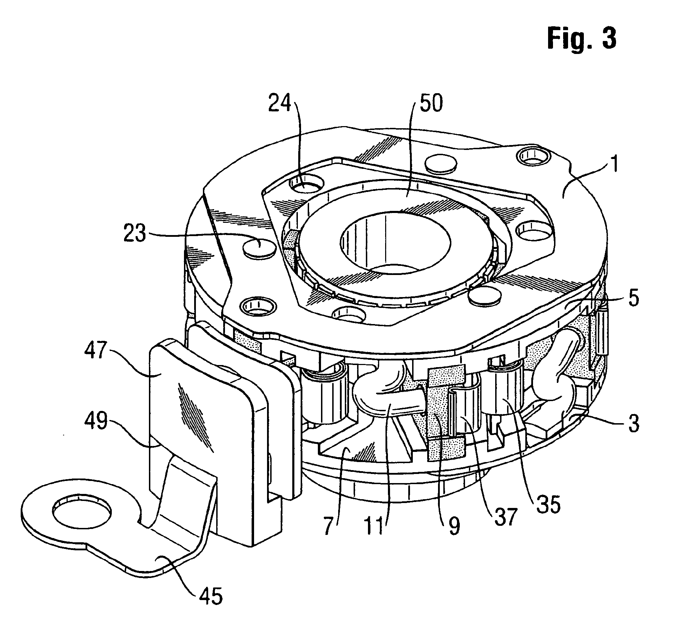

Nach dem Einsetzen der Federn ist das Bürstenaggregat im wesentlichen vollständig montiert. Die untere Leiterplatte 3 hat eine radial abstehende Stromanschlussfahne 45, deren Ende mit einem Stromzuführungskabel verbunden werden kann. (Die obere Leiterplatte 1 weist eine nicht dargestellte Verbindung mit Masse auf.) Beim Einbau des Bürstenaggregats in einen Startermotor muss die Anschlussfahne 45 sich durch die (nicht dargestellte) Wandung des Motorgehäuses erstrecken und gegen diese mit einem Dichtungselement abgedichtet werden. Gemäß Fig. 3, die den montierten Endzustand des Bürstenaggregates zeigt, ist hierfür ein Dichtungselement 47 aus elastomerem Material vorgesehen, dessen Besonderheit darin besteht, das es einen in Querrichtung verlaufenden, an einem Ende offenen Schlitz 49 aufweist, der ein seitliches Aufschieben des Dichtungselements 47 auf die Anschlussfahne 45, das heißt in Tangentialrichtung zu dem Bürstenaggregat, gestattet. Damit wird das zeit- und kraftaufwendige Aufstecken in Radialrichtung, sowie die Ausübung von Radialkräften, die zur Verformung der Leiterplatte 3 und der Anschlussfahne 45 führen können, vermieden. Außerdem ist es dadurch möglich, den Stromanschluss in Form einer einfachen, mit der unteren Leiterplatte 3 einstückigen Anschlussfahne, ohne Kabel und Kabelschuh zu verwirklichen.

In Fig. 3 ist das fertig montierte Bürstenaggregat nicht mit der für Montage- und Transport verwendeten Schablone 33 (Dummy) dargestellt, sondern bereits mit einem Kommutator 50, an dem die radial inneren Enden der Bürsten schleifend anliegen sollen.

Man erkennt, dass der beschriebene Montagevorgang des Bürstenaggregats im wesentlichen drei Phasen umfasst, nämlich
a) axiale Montage durch Aufeinanderstapeln der Leiter- und Führungsplatten 1, 5, 7 und 3 und Zusammenfügen mittels der axial eingebrachten Nieten 23, 24, wobei alle Nieten in einem Arbeitsgang gleichzeitig gleich zeitig vernietet werden können;
b) radiale Montage durch radiales Einschieben der Bürsten 9 in die zugehörigen Führungen 21 und anschließendes radiales Einsetzen der Federn 35 mit ihren Wickelkernen 39 in die entsprechenden Aufnahmen 40 und Führungsrillen 41, wobei alle sechs Federn 35 gleichzeitig radial eingeführt werden können;
c) tangentiale Montage durch Aufschieben des quer geschlitzten Dichtungselements 47 in Tangentialrichtung auf die Anschlussfahne 45.

Insgesamt ergibt sich ein sehr vereinfachtes und kostengünstiges Montageverfahren des Bürstenaggregats. Insbesondere das radiale Fügen der Spiralfedern 35 liefert die folgenden Vorteile: es ist kein oder nur ein geringes Vorspannen der Federn 35 vor dem Einsetzen notwendig; durch die radiale Bewegung in die radial nach außen offenen Aufnahmen 40 ergibt sich eine gute Zugänglichkeit; hinsichtlich der Bürstenposition in Radialrichtung vor dem Einsetzen der Federn besteht eine hohe Toleranz. Die flachen Wickelkerne 39 der Federn 35 rasten beim Erreichen der Endlage aufgrund der Reaktionskräfte der Federn selbsttätig hinter die Rastnasen 43 der Führungsrillen 41 der oberen und unteren Führungsplatte ein. Im übrigen wird durch die Reaktionskraft der Wickelkerne 37 der Federn die Steifigkeit des gesamten Aggregats, zusätzlich zu den Positionierzapfen 17 und Nieten 23, 24, noch weiter erhöht.

Die Erfindung ist nicht auf die Einzelheiten der dargestellten Ausführungsform beschränkt. Obwohl ein Bürstenaggregat mit sechs Bürsten also bevorzugte Ausführungsform dargestellt und beschrieben wurde, ist die Erfindung unabhängig von der Bürstenzahl, im Grenzfall auch mit einer einzigen Bürste, anwendbar. Als Verbindungselemente zum Zusammenfügen der Leiter- und Führungsplatten sind Nieten beschrieben worden, jedoch können wahlweise oder zusätzlich auch andere Verbindungselemente wie Schrauben, Klammern, oder auch eine Verklebung angewendet werden.

## Patentansprüche

1. Bürstenaggregat für eine elektrische Maschine, das folgende Merkmale aufweist:
a) vier ringförmige Plattenelemente (1, 3, 5, 7) sind aufeinander gestapelt und durch Befestigungsmittel starr zusammengefügt;
b) die beiden äußeren Plattenelemente sind ringförmige Leiterplatten (1, 3), die mit einer oder mehreren Bürsten (9) elektrisch leitend verbunden sind;
c) zwischen den Leiterplatten (1, 3) sind zwei Führungsplatten (5, 7) aus elektrisch isolierendem Material angeordnet, die an den einander zugewendeten Seiten eine Formgebung mit Vorsprüngen (13) und Vertiefungen (21) aufweisen, wobei die Vorsprünge Stützflächen (15) für die Anlage an entsprechenden Stützflächen (15) der jeweils anderen Führungsplatte bilden;
d) die Vertiefungen der Führungsplatten ergänzen sich zur Bildung von radialen Führungen (21), in denen die mit den Leiterplatten (1, 3) elektrisch verbundenen Bürsten (9) radial verschieblich angeordnet sind.

2. Bürstenaggregat nach Anspruch 1, bei dem die Befestigungsmittel als Nieten (23, 24) ausgebildet sind, die sich durch die Leiterplatten (1, 3) und Führungsplatten (5, 7) erstrecken.

3. Bürstenaggregat nach Anspruch 2, bei dem jede der Leiterplatten (1 bzw. 3) durch Nieten (23, 24) mit beiden Führungsplatten (5, 7), aber nicht mit der anderen Leiterplatte (3 bzw. 1) verbunden ist.

4. Bürstenaggregat nach Anspruch 1, bei dem jede Bürste (9) mit der zugehörigen Leiterplatte (1, 3) durch ein flexibles Kabel (11) mechanisch und elektrisch verbunden ist, dessen Flexibilität und Länge so bemessen sind, dass die Bürste (9) nach dem Zusammenfügen der Leiterplatten und Führungsplatten radial von außen in die entsprechende, von den Führungsplatten gebildete Führung (21) einführbar ist.

5. Bürstenaggregat nach einem der Ansprüche 1 bis 4, mit einer Federanordnung, die die folgenden Merkmale aufweist
a) an einem im wesentlichen ringförmigen Grundkörper des Bürstenaggregats ist mindestens eine radiale Führung (21) für eine Bürste (9) und mindestens eine Aufnahme (40) für eine auf die Bürste einwirkende Feder ausgebildet;
b) in der bzw. jeder Aufnahme ist ein Feder (35) angeordnet, die als Spiralfeder ausgebildet ist, deren äußeres Ende gegen die Bürste (9) anliegt und deren inneres Ende an einem Dorn (39) befestigt ist, dessen beiden Enden über die Spiralfeder (35) überstehen und einen abgeflachten Querschnitt haben;
c) in der oberen und unteren Stirnfläche der Aufnahme (40) sind schlitzartige Führungsrillen (41) für die Enden des Dorns (39) ausgebildet, die radial nach außen offen sind derart, dass die Spiralfeder mit dem Dorn radial von außen in die Aufnahme (40) einsetzbar ist und dabei die Enden des Dorns in der schlitzförmigen Führung drehfest bzw. Führungsrille (41) geführt sind.

6. Bürstenaggregat nach Anspruch 5, bei der die Führungsrillen (41) je einen Rastvorsprung (43) aufweisen, hinter den die Enden des Dorns (39) beim Einsetzen der Feder in die Aufnahme (40) einrasten und durch die Reaktionskraft der mit ihrem äußeren Ende an der Bürste (9) anliegenden Feder (35) fixiert werden.

7. Dichtungsanordnung für eine Bürstenaggregat für elektrische Maschinen gemäß einem der Ansprüche 1 bis 3, mit einer von einer Leiterplatte (3) des Bürstenaggregats radial abstehenden Stromanschlussfahne (45) und einem auf die Anschlussfahne aufschiebbaren gummielastischen Dichtungselement (47), wobei das Dichtungselement einen zu einer Seite hin offenen Schlitz (49) aufweist, mit dem es in einer bezüglich des ringförmigen Bürstenaggregats tangentialen Richtung auf die Stromanschlussfahne (45) aufschiebbar ist.

8. Verfahren zur Herstellung eines Bürstenaggregats für elektrische Maschinen, mit den Schritten,
a) Vorfertigen von zwei ringförmigen Leiterplatten (1, 3) aus Metallblech, wobei mit jeder Leiterplatte mindestens eine Bürste (9) über ein flexibles Kabel (11) elektrisch leitend verbunden ist;
b) Vorfertigen von zwei Führungsplatten aus elektrisch isolierendem Material, die Vorsprünge und dazwischen Vertiefungen aufweisen, wobei die sich die Vertiefungen der beiden Führungsplatten zu in Radialrichtung verlaufenden Führungen (21) für die Bürsten (9) und zu radial nach außen offenen Aufnahmen (40) für auf die Bürsten (9) einwirkende Federn (35) ergänzen;
c) axiales Zusammenfügen einer Leiterplatte (1), der beiden Führungsplatten (5, 7) und der anderen Leiterplatte (3) - in dieser Reihenfolge - zu einem Plattenstapel;
d) Zusammenfügen der Platten mittels Verbindungsmitteln;
e) radiales Einführen der Bürsten (9) in die von den Führungsplatten gebildeten Führungen (21);
f) radiales Einsetzen von als Spiralfedern ausgebildeten Federn (35) in die von den Führungsplatten gebildeten Aufnahmen (40).

9. Verfahren nach Anspruch 8, bei dem die Platten durch Vernieten zusammengefügt werden.

10. Verfahren nach Anspruch 8 oder 9, bei die Verbindungsmittel bzw. Nieten (23, 24) jede der beiden Leiterplatten (1 bzw. 3) mit beiden Führungsplatten (5, 7), aber nicht mit der anderen Leiterplatte (3 bzw. 1) verbinden.

11. Verfahren nach Anspruch 8, bei dem beim radialen Einsetzen der Spiralfedern (35) in die Aufnahmen (40) an den Spiralfedern vorgesehene Vorsprünge (39) durch die von der Feder (35) ausgeübte Federkraft zum Einrasten hinter an der Aufnahme (40) vorgesehene Rastvorsprünge (43) gebracht werden.

12. Verfahren nach einem der Ansprüche 8 bis 11, mit dem weiteren Schritt des tangentialen Aufschiebens eines elastomeren Dichtungselements (47) auf eine an der einen Leiterplatte radial vorstehende Stromanschlussfahne (45).

## Claims

1. Brush aggregate for an electric machine which comprises the following features:
a) four annular plate members (1, 3, 5, 7) are stacked on each other and rigidly joined together by securing means;
b) the two outer plate members are annular conductor plates (1, 3) which are electrically conductively connected to one or more brushes (9);
c) between the conductor plates (1, 3) two guide plates (5, 7) of electrically insulating material are arranged which on the sides facing each other have a shape with projections (13) and recesses (21), the projections forming support faces (15) for bearing on corresponding support faces (15) of the respective other guide plate ;
d) the recesses of the guide plates complement each other to form radial guides (21) in which the brushes (9) electrically connected to the conductor plates (1, 3) are radially displaceably arranged.

2. Brush aggregate according to claim 1, wherein the securing means are formed as rivets (23, 24) which extend through the conductor plates (1, 3) and the guide plates (5, 7).

3. Brush aggregate according to claim 2, wherein each of the conductor plates (1 or 3) is connected by rivets (23, 24) to the two guide plates (5, 7) but not to the other conductor plate (3 or 1) .

4. Brush aggregate according to claim 1, wherein each brush (9) is mechanically and electrically connected to the associated conductor plate (1, 3) by a flexible cable whose flexibility and length are so dimensioned that after the joining together of the conductor plates and the guide plates the brush (9) can be introduced radially from the outside into the corresponding guide (21) formed by the guide plates.

5. Brush aggregate according to any one of claims 1 to 4 comprising a spring arrangement having the following features
a) on a substantially annular base body of the brush aggregate at least one radial guide (21) for a brush (9) and at least one receiver (40) for a spring acting on the brush are formed;
b) in the or each receiver a spring (35) is arranged which is formed as spiral spring, the outer end of which bears against the brush (9) and the inner end of which is secured to a mandrel (39), the two ends of which project beyond the spiral spring (35) and have a flattened cross-section;
c) in the upper and lower end face of the receiver (40) slot-like guide grooves (41) for the ends of the mandrel (39) are formed and are radially outwardly open in such a manner that the spiral spring with the mandrel can be inserted radially from outside into the receiver (40) and the ends of the mandrel are thereby guided non-rotatably in the slot-like guide or guide groove (41).

6. Brush aggregate according to claim 5, wherein the guide grooves (41) each have a detent projection (43) behind which the ends of the mandrel (39) engage on insertion of the spring into the receiver (40) and are fixed by the reaction force of the spring (35) bearing with its outer end on the brush (9).

7. Sealing arrangement for a brush aggregate for electrical machines according to any one of claims 1 to 3, comprising a power connection lug (45) projecting radially from a guide plate (3) of the brush aggregate and an elastomeric sealing member (47) adapted to be pushed onto the connection lug, wherein the sealing member has a slot (49) open towards one side with which it can be pushed onto the power connection lug (45) in a direction tangential to the annular brush aggregate.

8. Method of producing a brush aggregate for electrical machines comprising the steps:
a) prefabrication of two annular conductor plates (1, 3) from sheet metal, at least one brush (9) being electrically conductively connected via a flexible cable (11) to each conductor plate;
b) prefabrication of two guide plates from electrically insulating material which have projections and recesses therebetween, whereby the recesses of the two guide plates complement each other to form radially extending guides (21) for the brushes (9) and to form radially outwardly open receivers (40) for springs (35) acting on the brushes (9);
c) axial placing together of a conductor plate (1), the two guide plates (5, 7) and the other conductor plate (3) - in that order - to form a plate stack;
d) joining the plates together by connecting or securing means;
e) radial insertion of the brushes (9) into the guides (21) formed by the guide plates;
f) radial insertion of springs (35) formed as spiral springs into the receivers (49) formed by the guide plates.

9. Method according to claim 8, wherein the plates are joined together by riveting.

10. Method according to claim 8 or 9, wherein the connecting means or rivets (23, 24) connect each of the two conductor plates (1, 3) to both guide plates (5, 7) but not to the other conductor plate (3, 1).

11. Method according to claim 8, wherein on radial insertion of the spiral springs (35) into the receivers (40) due to the spring force exerted by the spring (35) projections (39) provided on the spiral springs are brought into engagement behind detent projections (43) provided on the receiver (40).

12. Method according to any one of claims 8 to 11 comprising the further step of pushing an elastomeric sealing member (47) tangentially onto a power connection lug (45) projecting radially on the one conductor plate.

## Revendications

1. Unité porte-balais pour un moteur électrique, laquelle présente les caractéristiques suivante :
a) quatre éléments de plaque annulaires (1, 3, 5, 7) empilés les uns au-dessus des autres et assemblés de manière fixe grâce à des moyens de fixation ;
b) les deux éléments de plaque extérieurs sont des plaques de circuits imprimés annulaires (1, 3), lesquelles sont reliées de manière électroconductrice à un ou plusieurs balais (9) ;
c) deux plaques de guidage (5, 7) en un matériau isolant électriquement sont disposées entre les plaques de circuits imprimés (1, 3), lesquelles plaques de guidage présentent sur les côtés se faisant face une forme avec des saillies (13) et des creux (21), les saillies formant des surfaces d'appui (15) pour reposer contre des surfaces d'appui (15) correspondantes respectivement de l'autre plaque de guidage ;
d) les creux des plaques de guidage sont complémentaires afin de former des coulisses radiales (21) dans lesquelles sont disposés les balais (9) en liaison électrique avec les plaques de circuits imprimés (1, 3) de manière à pouvoir coulisser radialement.

2. Unité porte-balais selon la revendication 1, dans le cadre de laquelle les moyens de fixation sont réalisés en tant que rivets (23, 24) qui s'étendent à travers les plaques de circuits imprimés (1, 3) et les plaques de guidage (5, 7).

3. Unité porte-balais selon la revendication 2, dans le cadre de laquelle chacune des plaques de circuits imprimés (1 et/ou 3) est reliée grâce à des rivets (23, 24) aux deux plaques de guidage (5, 7), mais pas à l'autre plaque de circuits imprimés (3 et/ou 1).

4. Unité porte-balais selon la revendication 1, dans le cadre de laquelle chaque balais (9) est relié de manière mécanique et électrique à la plaque de circuits imprimés associée (1, 3) grâce à un câble flexible (11), dont la flexibilité et la longueur sont étudiées de manière à ce que le balais (9), après l'assemblage des plaques de circuits imprimés et des plaques de guidage, puisse être introduit radialement depuis l'extérieur dans la coulisse (21) correspondante formée par les plaques de guidage.

5. Unité porte-balais selon l'une quelconque des revendications 1 à 4, avec un dispositif de ressort présentant les caractéristiques suivante :
a) sur un corps de base essentiellement annulaire de l'unité porte-balais, au moins une coulisse radiale (21) pour un balais (9) et au moins un logement (40) pour un ressort agissant sur le balais sont formés ;
b) dans ce et/ou chacun des logements est disposé un ressort (35), lequel est réalisé en tant que ressort spiral dont l'extrémité extérieure repose contre le balais (9) et dont l'extrémité intérieure est fixée sur un mandrin (39), dont les deux extrémités dépassent du ressort spiral (35) et présentent une section transversale plate ;
c) dans la surface frontale du haut et du bas du logement (40) sont formées des rainures de guidage (41) semblables à des fentes pour les extrémités du mandrin (39), lesquelles sont ouvertes radialement vers l'extérieur de manière à pouvoir insérer le ressort spiral avec le mandrin radialement depuis l'extérieur dans le logement (40) et de sorte que les extrémités du mandrin soient ainsi guidées de façon bloquée en rotation dans la coulisse et/ou la rainure de guidage (41) en forme de fente.

6. Unité porte-balais selon la revendication 5, dans le cadre de laquelle les rainures de guidage (41) présentent respectivement une butée (43), derrière laquelle les extrémités du mandrin (39) se mettent en prise dans le logement (40) lors de la mise en place du ressort et sont fixées grâce à la force de réaction du ressort (35) reposant avec ses extrémités extérieures contre le balais (9).

7. Système d'étanchéité pour une unité porte-balais pour moteurs électriques selon l'une quelconque des revendications 1 à 3, avec une borne de connexion électrique (45) dépassant radialement d'une plaque de circuits imprimés (3) de l'unité porte-balais et un élément d'étanchéité (47) élastique comme du caoutchouc pouvant être enfilé sur la borne de connexion, moyennant quoi l'élément d'étanchéité présente une fente (49) ouverte d'un côté grâce à laquelle il peut être enfilé sur la borne de connexion électrique (45) dans une direction tangentielle par rapport à l'unité porte-balais annulaire.

8. Procédé de fabrication d'une unité porte-balais pour moteurs électriques, avec les étapes suivante :
a) préfabrication de deux plaques de circuits imprimés annulaires (1, 3) en tôle métallique, au moins un balais (9) étant relié de manière électroconductrice à chaque plaque de circuits imprimés par l'intermédiaire d'un câble flexible (11) ;
b) préfabrication de deux plaques de guidage en un matériau isolant électriquement, lesquelles présentent des saillies et des creux situés entre, moyennant quoi les creux des deux plaques de guidage sont complémentaires avec des coulisses (21) s'étendant radialement pour les balais (9) et avec des logements (40) ouverts radialement vers l'extérieur pour des ressorts (35) agissant sur les balais (9) ;
c) assemblage axial d'une plaque de circuits imprimés (1), des deux plaques de guidage (5, 7) et de l'autre plaque de circuits imprimés (3), dans cet ordre, pour donner un empilement de plaques ;
d) assemblage des plaques à l'aide de moyens de connexion ;
e) insertion radiale des balais (9) dans les coulisses (21) formées par les plaques de guidage ;
f) insertion radiale de ressorts (35) réalisés en tant que ressorts spiraux dans les logements (40) formés par les plaques de guidage.

9. Procédé selon la revendication 8, dans le cadre duquel les plaques sont assemblées par rivetage.

10. Procédé selon la revendication 8 ou 9, dans le cadre duquel les moyens de connexion et/ou rivets (23, 24) relient chacune des deux plaques de circuits imprimés (1 et/ou 3) aux deux plaques de guidage (5, 7), mais pas à l'autre plaque de circuits imprimés (3 et/ou 1).

11. Procédé selon la revendication 8, dans le cadre duquel lors de l'insertion radiale des ressorts spiraux (35) dans les logements (40), des saillies (39) prévues sur les ressorts spiraux se mettent en prise grâce à la force élastique exercée par le ressort (35) derrière des butées (43) prévues sur le logement (40).

12. Procédé selon l'une quelconque des revendications 8 à 11, avec l'étape suivante de l'enfilage tangentiel d'un élément d'étanchéité élastomère (47) sur une borne de connexion électrique (45) dépassant radialement sur l'une des plaques de circuits imprimés.
